# EUROPEAN PATENT APPLICATION

(11) **EP 2 768 162 A1**
(43) Date of publication of application: **20.08.2014**
(21) Application number: 14152989.1
(22) Date of filing: 29.01.2014
(51) Int. Cl.: H04B 10/114, B64D 11/00, H04H 20/62, H04N 21/214, H04N 21/414

(54) **In-flight Li-Fi media distribution system**

(30) Priority: 13.02.2013 US 201313766412
(71) Applicant: TEAC Areospace Technologies, Inc., Charlotte NC, North Carolina 28217 (US)
(72) Inventor: Vargas, Dan, Long Beach, CA California 90808 (US)
(74) Representative: Hull, James Edward

(57) **Abstract**

A media distribution system (18) for aircraft (10) comprises a processor (104), an optical encoder/decoder (106), and an optical backbone (22). The processor (104) is configured to retrieve digital media from an in-flight media node (100, 102). The optical encoder/decoder (106) is configured to optically encode the digital media. The optical backbone (22) is configured to carry the encoded digital media between the optical encoder/decoder (106) and a Li-Fi access point (24) at a passenger seat location (16).

## Description

### BACKGROUND

The present invention relates generally to wireless networks, and more particularly to in-flight networking systems for entertainment and communication.

Aircraft cabins present a challenging environment for the distribution of digital media. Conventional passenger aircraft use wired and/or wireless radio wave (e.g. cellular or IEEE 802.11 standard Wi-Fi) networks to provide each passenger with limited access to media such as locally stored movies and films, phone calls to and from groundside recipients, and email and/or internet access. Wireless networking allows passengers to quickly and easily connect to an aircraft network without need for wired connections leading to each seat location. Wired connection with passenger devices furthermore requires cables that may be lost or damaged, and which may impede mobility about the aircraft cabin. Conventional radio-wave networks, on the other hand, are limited by electromagnetic interference (EMI) effects. In particular, strong concerns over interference with aircraft navigation systems constrict bandwidth available for wireless signals, while EMI from large numbers of simultaneous users in the crowded space of an aircraft cabin degrades wireless signal quality. Today, many if not most passengers bring wireless devices onto passenger aircraft, and demand increasing bandwidth for the transfer of larger and more numerous files.

### SUMMARY

The present invention is directed toward a media distribution system for aircraft. The media distribution system comprises a processor, an optical encoder/decoder and an optical backbone. The processor is configured to retrieve digital media from an in-flight media node. The optical encoder/decoder is configured to optically encode the digital media. The optical backbone is configured to carry the encoded digital media between the optical encoder/decoder and a Li-Fi access point at a passenger seat location.

The present invention provides a media distribution system and a method as claimed in claims 1 and 13.

The network backbone may be a fiber optical cable line extending from the optical encoder/decoder to the Li-Fi access point.

### BRIEF DESCRIPTION OF THE DRAWINGS

FIG. 1 is simplified overhead view of an aircraft cabin, illustrating an optical media distribution system.
FIG. 2 is a schematic view of the media distribution system of FIG. 1.
FIG. 3 is an perspective view of a passenger access point of the media distribution system of FIG. 1.

### DETAILED DESCRIPTION

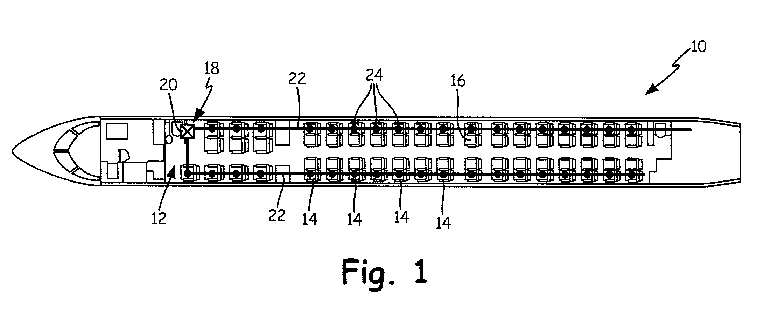

FIG. 1 illustrates aircraft 10 with cabin 12 housing seats 14 with passenger locations 16, and media distribution system 18. Media distribution system 18 comprises network hub 20, network backbone 22, and Li-Fi access points 24.

As depicted in FIG. 1, aircraft 10 is a conventional passenger airliner with seating for a large number of passengers who may require simultaneous access to various media including in-flight movies or music, telephone or video calls, email, and other online materials. Aircraft 10 is depicted with nineteen rows of seats 14, each seat 14 potentially including multiple passenger locations 16. More generally, aircraft 10 may be a passenger or non-passenger aircraft with any configuration of passenger locations 16. Passengers at each passenger location 16 may individually request digital media.

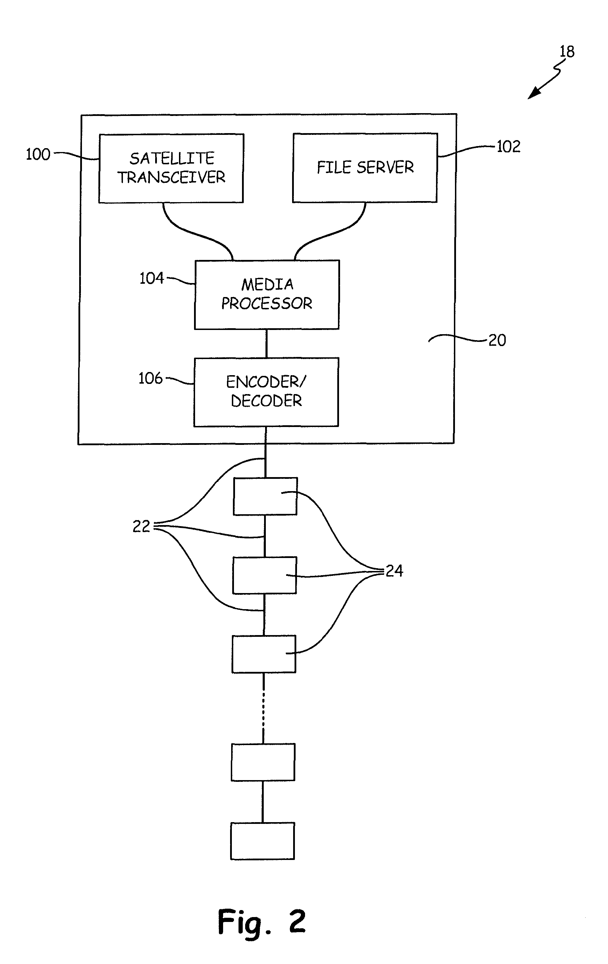

Media distribution system 18 is a media storage, archival, retrieval, and networking system serving all passenger locations 16. Media distribution system 18 is discussed in further detail below with respect to FIG. 2, and includes network hub 20, network backbone 22, and Li-Fi access points 24. Network hub 20 is a computer or computer system with at least one processor, optical encoder/decoder, and media node. Network backbone 22 is a fiber-optic cable line extending from network hub 20 to each Li-Fi access point 24. Network backbone 22 may, for instance, be formed of a plurality of silica or plastic optical waveguides. Network backbone 22 can, in some embodiments, include a separate dedicated optical fiber line extending between network hub 20 and each Li-Fi access point 24. Alternatively, network backbone 22 may comprise a common set of optical fiber lines extending serially to several Li-Fi access points 24. FIG. 1 illustrates an embodiment of network backbone 22 comprising separate port and starboard optical fiber lines, but network backbone 22 may more generally have any architecture suitable for connecting Li-Fi access points 24 to network hub 20. In some alternative embodiments, network backbone 22 may be a conductive cable line configured to carry non-optical signals, to separate encoder/decoders paired with each Li-Fi access point 24.

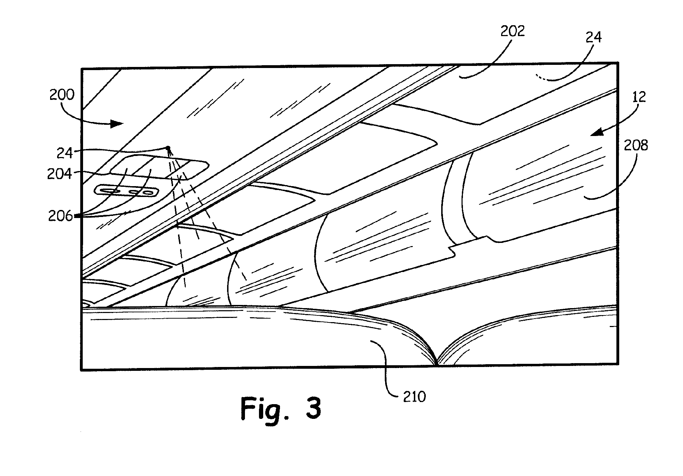

Li-Fi access points 24 are optical wireless access points configured to communicate with Li-Fi capable passenger devices such as laptops, smartphones, and/or tablets at passenger locations 16. Each Li-Fi access point includes at least one photoreceptor and at least one light source such as a light emitting diode (LED) or LED array. In the illustrated embodiment, each seat 14 is provided with its own dedicated Li-Fi access point 24 shared by all passenger locations 16 on seat 15. In alternative embodiments, each passenger location 16 may be provided with its own dedicated Li-Fi access point. Some embodiments of Li-Fi access point 24 can include limited processing hardware capable of addressing multiple passenger devices access point 24. In other embodiments, addressing may be instead be performed by network hub 20. As discussed below with respect to FIG. 3, Li-Fi access points 24 may be situated in passenger lighting fixtures, such as overhead directional lighting fixtures or wash lighting fixtures. Li-Fi access points 24 may broadcast and receive optical signals at any appropriate wavelength or wavelength range. Non-visible wavelength signals may, for instance, be integrated into overhead- or bulkhead-mounted wash lighting without affecting passenger comfort.

Media distribution system 18 provides high speed wireless connectivity (>10Gbps with current Li-Fi technology) to Li-Fi capable passenger devices situated within line of sight of a Li-Fi access point 24. In some instances, particularly as a transitional measure while Li-Fi capable devices remain relatively uncommon, passengers may be provided with individual Li-Fi encoder/decoder attachments allowing their non-Li-Fi capable devices to connect to media distribution system 18. In some embodiments, media distribution system 18 may additionally include non-Li-Fi-based distribution mechanisms, such as wired plug-and-play connections at passenger locations 16 or conventional radio wave Wi-Fi networks access points.

FIG. 2 is a schematic view of media distribution system 18, including network hub 20, network backbone 22, and Li-Fi access points 24. In the illustrated embodiment, network hub 20 includes satellite transceiver 100, file server 102, media processor 104, and optical encoder/decoder 106. As discussed above with respect to FIG. 1, media distribution system 18 is a media storage, archival, retrieval, and networking system serving all passenger locations 16 via Li-Fi access points 24. Although network backbone 22 is depicted as an optical fiber line extending serially to a plurality of Li-Fi access points 24, equivalent architectures of network backbone 22 are also possible, as discussed previously.

Network hub 20 is a logic-capable computer or computer system tasked with communicating in-flight media to passengers at passenger locations 16 via network backbone 22 and Li-Fi access points 24. Satellite transceiver 100 and file server 102 represent two possible embodiments of media nodes accessible to media processor 104, a microprocessor or similar logic-capable device configured to process passenger requests from access points 24. Satellite transceiver is a transceiver disposed within aircraft 10 to broadcast and receive signals to and from a communication satellite. File server 102 is a read-writable file storage device. Media processor 104 can, for instance, route passenger telephone calls or internet data requests through satellite transceiver 100, and retrieve and/or store digital films, music, or other in-flight entertainment on file server 102. In some embodiments, media processor 104 may also reteive data from other media nodes, including read-only memory (ROM) storage devices such as blue-ray or digital video disk (DVD) players. Encoder/decoder 106 is a digital-optical encoder/decoder configured to translate digital signals from media processor 104 (including transmissions of requested content to passengers via access points 24) into optical signals capable of transmission along network backbone 22 and through Li-Fi access points 24. Conversely, encoder/decoder 106 also translates optical requests from passengers into digital signals readable by media processor 104.

Media processor 104 handles requests from each Li-Fi access point 24 by retrieving data from file server 102 or from communication satellites via satellite transceiver 100. Media processor 104 may also write to file servers 102 (e.g. with temporary passenger files, or with entertainment media to be made available to passengers during flight) and transmit messages via satellite transceiver 100. Unlike radio wave wireless systems Li-Fi access points 24 are not limited by EMI effects such as radio wave bandwidth congestion and restriction of bandwidth to protect aircraft navigational signals. Accordingly, Li-Fi access points 24 allow Li-Fi capable passenger devices to optically connect to media distribution system 18 at higher speeds than are available with conventional radio wave Wi-Fi systems.

FIG. 3 is a perspective view of an aircraft cabin 12, Li-Fi access points 24, illustrating one possible configuration of ceiling 200 with wash lighting 202, directed lighting assembly 204, overhead directional lights 206, overhead storage compartments 208, and seat backs 210. Ceiling 200 carries a variety of lighting and air circulation components. In particular, ceiling 200 includes a plurality of cabin lighting fixtures, including wash lighting 202 and directed lighting assembly 204. Wash lighting 202 is a diffuse light source providing low-intensity ambient light, while, directed lighting assembly 204 is an overhead assembly including lights for each individual passenger location 16. Directed lighting assembly 204 may additionally include air conditioning nozzles, flight attendant call buttons, and/or warning lights. Ceiling 200 also supports overhead storage compartments 208 for hand luggage. Seatbacks 210 are the rear portions of seats 14, and can, for instance, house wired power and data connections for electronic devices. In some instances, seatbacks 210 may be provided with individual Li-Fi adapters including Li-Fi encoder/decoders for non-Li-Fi capable passenger devices, as discussed above with respect to FIG. 1.

Access points 24 can be situated unobtrusively in directed lighting assembly 204 with exposed LEDs near overhead directional lights 206, as shown in FIG. 3. Alternatively or additionally, some embodiments of media distribution system 18 may situate access points 24 within wash lighting 202. Access points 24 in wash lighting 202 or directed lighting assembly 204 are well situated to maintain unobstructed line-of-sight with Li-Fi capable devices at or near passenger locations 16, but other locations with unobstructed line-of-sight may equivalently be used.

Media distribution system 18 provides high speed access to media nodes such as satellite transceiver 100 and file server 102 via media processor 103, encoder/decoder 106, network backbone 22, and Li-Fi access point 24. Media distribution system 18 is substantially unaffected by EMI, and can provide data transfer speeds in excess of 10Gbps to Li-Fi capable passenger devices without network congestion and/or interference with aircraft navigation systems.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A media distribution system (18) for aircraft (10), the media distribution system (18) comprising:
a processor (104) configured to retrieve digital media from an in-flight media node (100, 102);
an optical encoder/decoder (106) configured to optically encode the digital media; and
a network backbone (22) configured to carry the encoded digital media between the optical encoder/decoder (106) and a Li-Fi access point (24) at a passenger seat location (16).

2. The media distribution system (18) of claim 1, wherein the in-flight media node comprises a file server (102) onboard the aircraft (10).

3. The media distribution system (18) of claim 1 or 2, wherein the in-flight media node comprises a satellite transceiver (100) onboard the aircraft (10).

4. The media distribution system (18) of any of claims 1 to 3, wherein the Li-Fi access point (24) is situated within line-of-sight of the passenger seat location (16).

5. The media distribution system (18) of any preceding claim, wherein the Li-Fi access point (24) provides access for multiple passenger locations (16) via distinct addresses.

6. The media distribution system (18) of claim 5, wherein the Li-Fi access point (24) is a logic-capable device configured to address a plurality of passenger devices.

7. The media distribution system (18) of any of claims 1 to 4, comprising a Li-Fi access point (24) for each passenger seat location (16).

8. The media distribution system (18) of any preceding claim, wherein the processor (104) is configured to address a plurality of passenger devices accessible via the Li-Fi access point or points (24).

9. The media distribution system (18) of any preceding claim, wherein the Li-Fi access point (24) is situated in a cabin lighting fixture above the passenger seat location (16), and optionally wherein the cabin lighting fixture is:
a wash lighting fixture (202); or
a directed lighting assembly (204).

10. The media distribution system (18) of any preceding claim, wherein a plurality of Li-Fi access points (24) are distributed along the network backbone (22), and optionally wherein the network backbone (22) serially connects the plurality of Li-FI access points (24).

11. The media distribution system (18) of any preceding claim, wherein the network backbone (22) is an optical fiber line.

12. The media distribution system (18) of any preceding claim, wherein the Li-Fi access point (24) comprises a non-visible wavelength light emitting diode.

13. A media distribution method for an aircraft (10), the media distribution method comprising:
retrieving media from an in-flight media node (100, 102) using a media processor (104);
optically encoding the media using an optical encoder/decoder (106);
transmitting the optically encoded media along a network backbone (22) to a Li-Fi access point (24); and
communicating with a passenger device via light emissions from the Li-Fi access point (24).

14. The media distribution method of claim 13, wherein the light emissions are non-visible wavelength light.

15. The media distribution method of claim 13 or 14, wherein retrieving media from the in-flight media node comprises:
retrieving stored data from a file server (102) onboard the aircraft; or
communicating with an orbital satellite via a satellite transceiver (100) onboard the aircraft (10).
